# EUROPEAN PATENT SPECIFICATION

(11) **EP 0 518 210 B1**
(45) Date of publication and mention of the grant of the patent: **14.08.1996**
(21) Application number: 92109439.7
(22) Date of filing: 04.06.1992
(51) Int. Cl.: A01G 9/02, A01G 31/02

(54) **An apparatus in the cultivation of plants**
Ein Gerät für die Pflanzenkultur
Un appareil pour la culture de plantes

(30) Priority: 12.06.1991 SE 9101809
(43) Date of publication of application: 16.12.1992
(73) Proprietor: Simontorp Säteri AB, 270 35 Blentarp (SE)
(72) Inventor: Petersen, Poul, S-270 35 Blentarp (SE); Johansson, Jörgen, S-244 02 Furulund (SE); Nilsson, Olle, S-252 63 Helsingborg (SE)
(74) Representative: Sevrell, Sven-Gösta Uno

(56) References cited:
- EP-A- 0 300 578
- WO-A-89/04733
- DE-U- 9 004 640
- GB-A- 2 077 082

## Description

### TECHNICAL FIELD

The present invention relates to an apparatus in the cultivation of plants and a web-shaped blank foldable to form the apparatus according to the preamble of Claims 1 and 10, the apparatus displaying a trough with bottom, side walls and ends which together define an elongate cavity for cultivation of plants placed at the bottom of the trough.

### BACKGROUND ART

In rational and economical plant cultivation or breeding, it is necessary that the preconditions for the growth of the plants be stimulated in the best possible way, which is effected by a suitable supply of water, oxygen, nutrient substances, light etc., and by other external conditions such as temperature, air change etc. being as favourable as possible in order to create the correct conditions for growth.

It is previously known, in the cultivation of vegetables, to employ troughs or channels through which water enriched with nutritive substances flows in controlled proportions. Plants which are placed out in a suitable manner in such a cultivation trough and which may be supported in pots or by other suitable means and are in contact via their root system with the flowing nutritive-enriched water will enjoy extremely favourable growth conditions, since the nutrient content in the water is always optimated and can be controlled by means of a regulator which is in turn governed by an automatic analysis instrument. It is also previously known to interconnect a plurality of cultivation troughs in series and cause the water progressively to flow through the troughs in which the plants intended for cultivation are placed.

Prior art cultivation troughs of the type described in the foregoing have normally been made of concrete, sheet metal or similar durable materials, and an installation consisting of such troughs (or "flumes") has often constituted a permanent construction which it has not been possible to modify or adapt to suit the choice of plant varieties etc., without major alterations.

However, it has proved desirable to be able to utilize a more flexible cultivation system, with cheap, readily joinable troughs which, when necessary, can be extended in an optional manner and in optional configurations. Cultivation troughs of this type also enjoy the advantage that damaged trough units or sections may easily be replaced by new ones which, by folding and joining, are formed from a planar blank.

WO-A-89/04733 discloses a trough of this general type formed of metal blanks. The blanks are not continuous and kept on storage reels.

EP-A-0300578 discloses a similar trough formed of blanks of plastic material.

The object of the present invention is to obtain a trough of the above general type made of foldable plastic material and capable of sustaining the forces in use.

Another object of the invention is to make it possible to adopt the size of the trough to the available space by unrolling a suitable length of a plastic web from a magazine reel.

The above objects are attained by giving the invention the characterizing features stated in the appending claims.

### BRIEF DESCRIPTION OF THE ACCOMPANYING DRAWINGS

The present invention will now be described in greater detail hereinbelow, with particular reference to the accompanying schematic Drawings in which:
Fig. 1 shows a web-shaped portion of the blank which is paid out from a storage or magazine reel and from which the cultivation trough is produced;
Fig. 2 is a top plan view of the same blank which has been provided with an end embossment at the end zone of the blank;
Fig. 3 is a perspective view of a raised and joined cultivation trough according to the present invention;
Fig. 4 is a cross-section through the cultivation trough, with a plant inserted in place;
Fig. 5. is a greatly magnified cross-section through the material from which the cultivation trough is produced;
Fig. 6 shows how the passage on inflow to and outflow from the cultivation trough can be arranged;
Fig. 7 shows a planar blank of a plant support intended to be used together with the cultivation trough; and
Fig. 8 shows the plant support of Fig. 7 after folding formation into the active state.

### DESCRIPTION OF PREFERRED EMBODIMENT

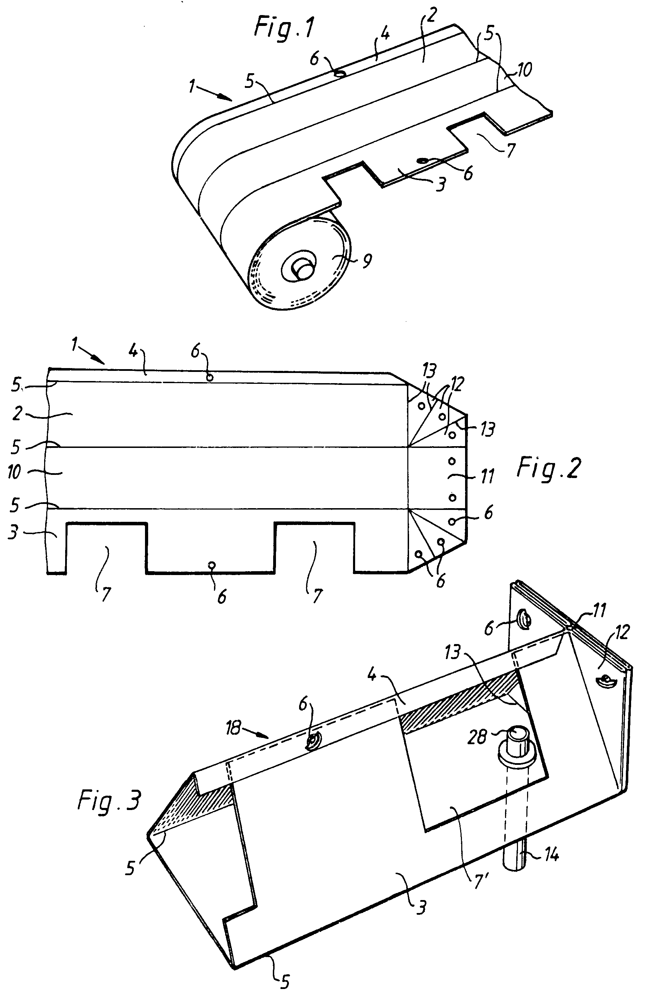

The blank, shown in Figs. 1 and 2, for producing a cultivation trough according to the present invention preferably consists of a foldable plastic material which is watertight and ideally displays no liquid-absorbing edges. A material particulary suited for this purpose will be discussed and described hereinbelow.

Referring to Fig. 1, the web 1 paid out from a storage or magazine reel 9 has three longitudinal crease lines 5 which faciltate folding and which, for example, may consist of a mechanical incision into the material, of a local attenuation of the material or some other form of processing which entails that the material readily permits folding along the crease lines 5 without rupturing in the line of fold. The web 1 further displays a longitudinal bottom panel 10 and a first and second side wall panel 2 and 3, respectively. Along one of the crease lines 5, the first side wall panel 2 is contiguous with a fixation panel 4. A recess 7 is provided in the second side wall panel 3, and the side wall panel 3 also displays a small hole or recess 6 which is disposed in register with a hole 6 provided in the fixation panel 4.

Fig. 2 shows how the end portion of the web 1 may be provided with a crease line pattern 13 with whose aid an end wall can be formed in the raised trough. The end wall-forming panels consist of a rectangular side panel 11 and triangular panels 12 contiguous with the panel 11 and mutually connected to one another and with the remainder of the blank through crease lines 13. The crease lines 13 can be punched into the web 1 by means of a simple, portable punching machine in which the web end is inserted, whereafter the pattern engraved on a pressure plate is forced into the web end so that this will have the appearance as shown in Fig. 2.

By folding together the blank 1 along the longitudinal crease lines 5, the web 1 can be formed into a trough 18 of triangular cross-section, as shown in Fig. 3. The trough 18 illustrated in Fig. 3 is formed in that the side wall panels 2 and 3 are folded along the crease lines 5 and collapsed towards one another so far that their edge zones coincide. In order to retain the trough 18 in the raised configuration, the fixation panel 4 which is continuous with the first side wall panel 2 is collapsed over the second side wall panel 3 in order to overlap its edge zone. In this position, the holes 6 provided in the side wall panel 3 and the fixation panel 4 register with one another through which holes for example an anchorage element may be passed and secured in the inserted position. Such an anchorage element may, for instance, consist of a plastic screw with large pitch or anchorage elements of the type which may be inserted through an oblong hole and then be locked by twisting. There is a plurality of applicable anchorage elements to choose from in order to secure the fixation panel 4 to the second side wall panel 3 and whichever is employed is of minor importance to the function of the present invention.

Once the trough 18 of triangular cross-section has been formed and secured in its formed state. The end wall panels illustrated in Fig. 2 can be raised up towards the end of the trough 18 and, by folding together of the triangular panels 12, an end wall can be formed of the type which is shown in Fig. 3. In order to retain the end wall 11 in its folded position, this may also be secured by means of an anchorage element 6 as shown in Fig. 3.

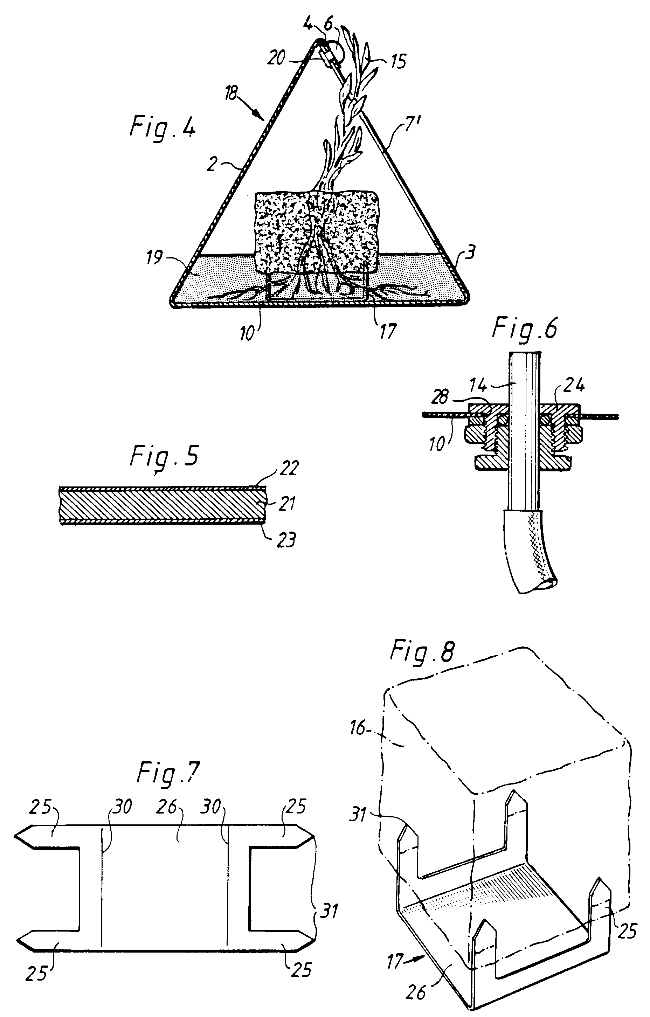

The recesses 7 shown in Figs. 1 and 2 form, in the trough 18, window-like apertures 7' in a manner illustrated in Fig. 3. Through the apertures 7', the interior of the trough 18 is accessible from outside and plants 15 inserted in the trough 18 can grow through the apertures 7'. Fig.3 also shows how the trough 18 is provided with an inflow or outflow 14. This inflow or outflow consists of a pipe or a hose which is inserted through a hole 28 in the bottom of the trough 18, or which is inserted in the trough 18 in any other manner, e.g. through the recess 7. A part of this inflow or outflow 14 is shown in Fig. 6, in which reference numeral 10 designates the bottom of the trough and a hole made in the bottom 10 of the trough is designated 28. A pipe 14 is passed through the hole 28 and, by providing both internal and external sealing elements 24 which, for example, may be of the type in which a rubber ring or washer disposed between a nut and a seat is compressed, the hole diameter of the rubber washer will be reduced and in such instance clamp about the pipe 14 passed through the rubber washer. By raising or lowering the pipe 14 serving as spillway overflow, the liquid level in the trough 18 can be regulated to the desired level. While it is practical to design both inflow and outflow aperture to the trough in the same way, it is not, however, necessary that the inflow aperture be provided by means of a hole 28 made in the bottom 10 of the trough 18, it being sufficient to provide a hole in the end wall 11 of the trough, through which hole a hose or pipe may be inserted for the supply of water enriched with nutrients - and, as has been mentioned above, the hose may even be inserted through one of the windows 7. If this hole in the end wall of the trough is located above the liquid level in the trough 18, no sealing is required between the wall of the trough 18 and the supply pipe or hose.

Fig. 4 shows a cross-section through the trough 18 illustrating how a plant 15 which is planted in a carrier body 16 and disposed on a plant support 17 is placed in the trough in such a manner that the roots of the plant are in contact with the water 19 running through the trough 18 for absorbing nutrients, and how the plant 15 grows out through the window 7' in the side of the triangular trough 18. In the fashion as described earlier, the trough 18 displays a bottom portion 10 and two side walls 2 and 3 which slope towards one another such that the trough 18 is closed and the roots of the plant 15 are protected from external light radiation. In the embodiment illustrated here, the window openings 7' are only provided in the side wall panel 3, but, in certain cases, it may be advantageous alternatingly to provide the window apertures 7' in both of the side wall panels 2 and 3 so that they form a zig-zag pattern about the top edge of the trough 18. It is also possible, in a simple manner, to lock the side wall panels 2 and 3 to one another in the raised position by designing the upper portion of the window apertures of one row with a reversibly folding flap which can be folded inwardly and in such an instance lock the opposing side walls.

Plants of this type, such as cucumber, tomato, egg-plants, etc. are often sprouted in a carrier body 16 which may consist of a mineral wool cube with a side length of between 5 and 8 cm. This carrier body 16 with its sprouted plant is placed in the trough 18 on a plant support 17 and inserted through the window 7' in the manner illustrated in Fig. 4. With the aid of the plant support 17, the carrier body 16 is raised so that it does not rest on the bottom portion 10 of the trough 18 and thereby obstruct the liquid flow through the trough 18. Since the trough 18 is, in the manner illustrated, substantially enclosed, a protected environment is created for the root system of the plant 15 at the same time as the root system is protected against harmful light radiation. Fig. 5 shows a cross-section through the laminate material which may advantageously be employed in the web 1 for producing the trough 18. Basically, this material consists of a carrier portion 21 of a thermoplastic, preferably polypropylene, propene-homopolymer or ethylene/propene copolymer. This carrier layer has an admixture of an organic or inorganic filler of between 50 and 80 weight per cent. As filler, use may ideally be made of dolomitic limestone which gives no harmful depositions in the water if this were to come into contact with the carrier layer 21. Fillers such as chalk, talcum or similar materials can also be employed. The carrier layer 21 is further coated, preferably on both sides, with homogeneous layers 22, 23 of, for example, polypropylene plastic, and that side of the material facing towards the interior of the trough 18 may be coloured black, for example by the admixture of carbon black in the plastic layer 23, while the surface layer 22 which forms the outside of trough 18 may have an admixture of, for instance, titanium oxide which gives a white and light reflective surface in order to prevent excessively great thermal absorption in the trough 18. As a result of the black or dark-coloured inside, the root system of the plants is not heated. In the manner mentioned above, the trough 18 is fixed in position with the two mutually folded side walls 2 and 3, with the aid of the overlapping fixation panel 4 and suitable anchorage devices 20.

The plant support 17 illustrated in Fig. 4 may preferably be manufactured from the same material as the trough 18. Fig. 7 shows a planar blank for such a plant support 17, and this blank (which is H-shaped) consists of four outer panels 25 which terminated in a tip 31. The panels 25 are united with a transverse panel 26. Crease lines 30 are provided in the panel 26. Fig. 8 is a schematic perspective view showing how the outer parts of the blank are raised to mutually parallel positions by folding along the crease lines 30, and how the carrier body 16 which carries the plant 15 is placed on the upstanding parts 25 whose tipped ends 31 are caused to penetrate into the carrier body 16. Once the carrier body 16 is placed on the plant support 17, the plant can be inserted in the trough 18 through the window 7' and be placed on the bottom 10 of the trough 18 in the manner illustrated in Fig. 4.

A plurality of troughs 18 can be disposed in parallel with one another, the rear edges of the troughs 18 with the spillway overflow 14 being disposed adjacent a common pool or run-off channel (not shown) which may collect the water run-off from all of the troughs 18. From this pool or accumulation basin, the water can be filtered in a known manner and, after automatic analysis, enriched with nutrients to a concentration and composition suitable precisely for those plants being cultivated. After possible temperature conditioning, bactericidal treatment and adjustment of pH level, the treated water can be pumped to conduits with the aid of which the treated water is led to the inflow apertures of the troughs 18, whereafter the water 19 may be caused to flow through the troughs 18 and, in such instance, be brought into contact with the root system of the plants 15 in order to promote the growth of the plants 15.

Since the troughs 18 are made of a flexible material, they can be placed on an uneven surface, for example an earth floor, and if the substrate were to prove excessively uneven, such that large variations of the water level in the troughs 18 occur, it is a simple operation - either by adjusting the height of the troughs with substrate material or by inserting sluice gates (not shown) into the troughs - to achieve an as good as uniformly even water level. The above-mentioned sluice gates should be approximately of the same cross-sectional area and configuration as the trough, and the height of the sluice gates should be adapted to the desired liquid level. In order that the position of the troughs 18 may easily be adjustable in the lateral or vertical positions, each of the troughs is provided with a bellows-folded zone (not shown) along which the troughs can, to some degree, be divided in both the vertical and lateral directions. These bellows folds also entail that the side wall panels 2 and 3 of the troughs 18 are rigidified so that bulging of the side walls as a result of the pressure which the water in the troughs exercises on the side wall panels will be avoided or reduced.

When the troughs 18 are to be placed out in greenhouses or on the site where cultivation is to take place, a suitable length of web 1 is paid out from the magazine reel 9, whereafter the web length is cut off. Using the previously mentioned portable punching machine, it is easy to punch in the end wall pattern as illustrated in Fig. 2 and, thus, in connection with the fold-formation of the trough 18, also to form the end portions 11, 12 of the trough 18. Holes 28 for inflow and outflow are easily made using a suitable "punch pipe" and, after formation of the severed web section 1 into a trough 18 of triangular cross-section, the trough 18 is fixed in its position using appropriate anchorage devices 6, 20. Inflow and outflow conduits 14 are mounted in place and the trough 18 is supported in such a manner that the liquid level in the trough will be relatively even throughout the entire length of the trough. After connection of inflow conduit and outflow conduit to existing systems, with purification apparatus etc., water is pumped through the trough 18. Should it prove that the level differences are unacceptably great along the length of the trough, the above-mentioned sluice gates or barrier plates can be inserted in those places where the liquid level is too low. Finally, the prepared plants 15 (whose carrier bodies 16 have been disposed on the plant support 17) are inserted through the window apertures 7' and, by adjustment of the spillway overflow 14 of the troughs 18, a suitable water level can be adjusted such that the root systems of the inserted plants 15 will come into contact with the nutrient-enriched water.

When cultivation has ceased and the plants 15 have been removed, the troughs 18 can be opened out by removing the anchorage devices 20, 6 and laying out the troughs flat. In the flattened state, it is easy to clean the troughs 18, whereafter the flattened troughs can be nested together and stored away pending the next cultivation period.

It has proved that the apparatus according to the present invention is extremely rational and efficient and, in addition, economical. The system is furthermore extremely flexible, since the troughs require no permanent installations in greenhouses, it being possible instead to make the best use of that greenhouse space available, and the length of the troughs can readily be adapted to existing spaces in respect of both size and shape of the space available.

Cultivation results achieved using the apparatus according to the present invention have proved to be extremely good, not least because the troughs 18 provide an efficient shading and a suitable environment for the root system of the plants. Of course, it is not necessary that the troughs 18 be manufactured from the preferred material of polypropylene with a filler of dolomite chalk as proposed in the description, but it has proved that this material is of suitable weight and appropriate flexibility, which makes for simple handling of the troughs. A homogeneous plastic material of, for example, polyethylene or polypropylene has proved to be far too light in weight and far too deformable, since these materials do not possess the same degree of rigidity as a filled material. If the troughs 18 are manufactured from an unfilled plastic material, they will become more difficult to place out, they are easily dislodged from their position and easily become deformed on the application of outer stresses, in which event the passageway for the water may become obstructed. The plant supports 17 may also be designed in a manner different from that described above and shown on the Drawings, without, to that end, departing from the spirit and scope of the inventive concept as herein disclosed.

The present invention should not be considered as restricted to that described above and shown on the Drawings, many modifications being conceivable without departing from the scope of the appended Claims.

## Claims

1. An apparatus in the cultivation of plants, comprising a trough (18) with a bottom (10), side walls (2, 3) and ends (11) which together define an elongate cavity for cultivation of plants (15) placed out on the bottom (10) of the trough (18), said bottom (10), side walls (2, 3) and ends (11, 12) being formed from a continuous planar blank (1) of a watertight material which is provided with crease lines (5, 13) facilitating folding, and the apparatus displaying, at or in the proximity of its ends (11), inflow and outflow channels (14) through which water enriched with plant nutrients may be supplied and removed, respectively, while the trough (18) is subject to throughflow by said nutrient-enriched water, the end walls display planar end walls panels (11, 12) which are contiguous with the bottom (10) and side walls (2, 3) and which, by so-called bellows folding, or other fold formation along crease lines (13), are folded together towards one another, **characterized in that** said side walls (2, 3) are felled to one another and, along their upper edge, interconnected with one another throughout the entire length of the trough, for the formation of a trough having triangular cross section being a roof covering the bottom portion (10).

2. The apparatus as claimed in Claim 1, **characterized in that** the one side wall (2) displays a longitudinal fixation panel (4) which is folded down to planar abutment against the second side wall (3) and overlappingly united therewith.

3. The apparatus as claimed in Claim 2, **characterized in that** the side walls (2, 3) are interconnected with one another by means of releasable anchorage devices (6, 20) which are operative to secure the fixation panel (4) of said one side wall (2) to the upper edge zone of said second side wall (3).

4. The apparatus as claimed in Claim 1, **characterized in that** the roof formed by the side walls (2, 3) displays through holes or windows (7') through which the space within the trough (18) and its bottom portion (10) are accessible.

5. The apparatus as claimed in Claim 4, **characterized in that** said holes or windows (7') are disposed in both of the side wall panels (2, 3) and are localized in such a manner that they are alternatingly disposed in the one or the other panel (2 or 3).

6. The apparatus as claimed in Claim 1, **characterized in that** the troughs (18) are, throughout their length, provided with one or more bellows fold zones extending at right angles to the longitudinal axis of the troughs (18) and in which zones the troughs (18) can be slightly pivoted for adjusting the slope or lateral position of the trough (18).

7. The apparatus as claimed in any one of the preceding Claims, **characterized in that** there are provided, locally along the bottom portion (10) of the trough (18), walls or barrages partially closing the cross-sectional flow area of the trough.

8. The apparatus as claimed in Claim 1, **characterized in that** the inside of the trough (18) displays an opaque, preferably black coating, while its outside displays a reflective, preferably white coating.

9. The apparatus as claimed in Claim 1, **characterized in that** the inlet and/or outlet of the trough (18) consists of pipes (14) at the bottom (10) of the trough (18), inserted through liquid-tight devices, said pipes being displaceable in the vertical direction.

10. A web-shaped blank (1) for forming an apparatus as claimed in Claim 1, the blank (1) containing first and second side wall panels (2, 3) defined by means of crease lines (5) for forming the side walls of the trough, bottom panels (10) for forming the bottom of the trough (18) and rectangular end wall panels (11) defined at both ends of the blank (1), which are contiguous with the side wall panels (2, 3) along a plurality of mutually foldable contiguous triangular panels (12) collapsible towards one another **characterized in that** a fixation panel (4) pivotally united with said first side wall panel (2) and adapted to be connected to the second said wall panel (3) so as to form a trough having triangular cross section.

11. The web-shaped blank as claimed in Claim 10, **characterized in that** it consists of a laminated plastic material comprising a layer (21) serving as carrier and comprising a propylene-homopolymer or ethylene/propylene copolymer containing between 50 and 80 weight per cent of filler.

12. The web-shaped blank as claimed in Claim 11, **characterized in that** the filler consists of dolomitic limestone.

## Patentansprüche

1. Vorrichtung zur Pflanzenkultur mit einer Wanne (18) mit einem Boden (10), Seitenwänden (2, 3) und Enden (11), die zusammen einen länglichen Hohlraum zum Züchten von Pflanzen (15) bilden, die am Boden (10) der Wanne (18) angeordnet sind, wobei der Boden (10), die Seitenwände (2, 3) und die Enden (11, 12) aus einem kontinuierlichen, flächigen Rohling (1) aus einem wasserdichten Material gebildet sind, der mit Faltlinien (5, 13) versehen ist, die das Falten erleichtern, und die Vorrichtung an den Enden (11) oder in der Nähe davon Einlaß- und Auslaßkanäle (14) aufweist, durch die mit Pflanzennährstoffen angereichertes Wasser zu- bzw. abgeführt werden kann, während die Wanne (18) von dem mit Nährstoffen angereichertem Wasser durchflossen wird, wobei die Endwände flächige Endwandfelder (11, 12) aufweisen, die an den Boden (10) und die Seitenwände (2, 3) angrenzen und durch sogenanntes Balgfalten oder eine andere Faltformung entlang der Faltlinien (13) zusammengefaltet werden, **dadurch gekennzeichnet, daß** die Seitenwände (2, 3) zueinander gefaltet und längs ihrer Oberkante über die gesamte Länge der Wanne miteinander verbunden sind, um ein Wanne mit dreieckigem Querschnitt zu bilden, die ein Dach zum Abdecken des Bodenabschnitts (10) ist.

2. Vorrichtung nach Anspruch 1, **dadurch gekennzeichnet, daß** die eine Seitenwand (2) ein längliches Befestigungsfeld (4) aufweist, das in flächige Anlage gegen die zweite Seitenwand (3) nach unten gefaltet und überlappend damit vereinigt ist.

3. Vorrichtung nach Anspruch 2, **dadurch gekennzeichnet, daß** die Seitenwände (2, 3) mittels lösbarer Verankerungseinrichtungen (6, 20) miteinander verbunden sind, die so wirken, daß das Befestigungsfeld (4) der einen Seitenwand (2) an der oberen Kantenzone der zweiten Seitenwand (3) gesichert wird.

4. Vorrichtung nach Anspruch 1, **dadurch gekennzeichnet, daß** das durch die Seitenwände (2, 3) gebildete Dach Durchgangslöcher oder Fenster (7') aufweist, durch die der Raum innerhalb der Wanne (18) und ihr Bodenabschnitt (10) zugänglich sind.

5. Vorrichtung nach Anspruch 4, **dadurch gekennzeichnet, daß** die Löcher oder Fenster (7') in beiden Seitenwandfeldern (2, 3) angeordnet und derart lokalisiert sind, daß sie abwechselnd in dem einen oder dem anderen Feld (2 oder 3) angeordnet sind.

6. Vorrichtung nach Anspruch 1, **dadurch gekennzeichnet, daß** die Wannen (18) über ihre gesamte Länge mit einer oder mehreren Balgfaltzonen versehen sind, die sich rechtwinklig zur Längsachse der Wannen (18) erstrecken und in denen die Wannen (18) leicht verschwenkt werden können, um die Neigung oder seitliche Position der Wanne (18) einzustellen.

7. Vorrichtung nach einem der vorhergehenden Ansprüche, **dadurch gekennzeichnet, daß** längs des Bodenabschnitts (10) der Wanne (18) Wände oder Sperren vorgesehen sind, die teilweise den Querschnittsströmungsbereich der Wanne verschließen.

8. Vorrichtung nach Anspruch 1, **dadurch gekennzeichnet, daß** die Innenseite der Wanne (18) eine undurchsichtige, bevorzugt schwarze Beschichtung aufweist, während die Außenseite eine reflektierende, bevorzugt weiße Beschichtung aufweist.

9. Vorrichtung nach Anspruch 1, **dadurch gekennzeichnet, daß** der Einlaß und/oder Auslaß der Wanne (18) aus Rohren (14) am Boden (10) der Wanne (18) besteht, die durch flüssigkeitsdichte Einrichtungen eingesetzt sind, wobei die Rohre in vertikaler Richtung verschiebbar sind.

10. Bahnförmiger Rohling (1) zum Formen einer Vorrichtung nach Anspruch 1, wobei der Rohling (1) erste und zweite Seitenwandfelder (2, 3), die durch Faltlinien (5) zum Formen der Seitenwände der Wanne gebildet sind, Bodenfelder (10) zum Bilden des Bodens der Wanne (18) sowie rechteckige, an beiden Enden des Rohlings (1) gebildete Endwandfelder (11) enthält, die entlang mehrerer gegenseitig faltbarer, angrenzender dreieckiger Felder (12), die zusammenklappbar sind, an die Seitenwandfelder (2, 3) angrenzen, **dadurch gekennzeichnet, daß** ein Befestigungsfeld (4) schwenkbar mit dem ersten Seitenwandfeld (2) verbunden ist und mit dem zweiten Wandfeld (3) derart verbunden werden kann, daß eine Wanne mit dreieckigem Querschnitt gebildet wird.

11. Bahnförmiger Rohling nach Anspruch 10, **dadurch gekennzeichnet, daß** er aus einem laminierten Kunststoffmaterial mit einer Schicht (21) besteht, die als Träger dient und ein Propylen-Homopolymeres oder ein Ethylen-/Propylencopolymeres aufweist, das zwischen 50 und 80 Gew.-% Füllstoff aufweist.

12. Bahnförmiger Rohling nach Anspruch 11, **dadurch gekennzeichnet, daß** der Füllstoff aus dolomitischem Kalk besteht.

## Revendications

1. Appareil pour la culture de plantes, comprenant une goulotte (18) ayant un fond (10), des parois latérales (2,3) et des extrémités (11) qui définissent ensemble une cavité allongée pour la culture de plantes (15) installées sur le fond (10) de la goulotte (18), le dit fond (10), les dites parois latérales (2, 3) et les dites extrémités (11, 12) étant formés à partir d'une ébauche plane continue (1) en une matière étanche à l'eau qui est pourvue de lignes de prépliage (5, 13) facilitant le pliage, et l'appareil comportant, à ses extrémités (11) ou près de celles-ci, des conduits d'entrée et de sortie d'écoulement par lesquels de l'eau enrichie en substances nutritives des plantes peut être amenée et évacuée respectivement, tandis que la goulotte (18) est soumise à un écoulement traversant de la dite eau enrichie en substances nutritives, et les parois d'extrémité comportent des panneaux de paroi d'extrémité plans (11, 12) qui sont contigus au fond (10) et aux parois latérales (2, 3) et qui sont pliés les uns vers les autres par pliage du type dit en soufflet ou une autre formation de plis le long des lignes de prépliage (13), caractérisé en ce que les dites parois latérales (2, 3) sont pliées l'une vers l'autre et mutuellement interconnectées le long de leur bord supérieur, sur toute la longueur de la goulotte, pour la formation d'une goulotte ayant une section transversale triangulaire qui définit un toit couvrant le fond (10).

2. Appareil suivant la revendication 1, caractérisé en ce qu'une paroi latérale (2) comporte une languette longitudinale de fixation (4) qui est rabattue vers le bas en butée à plat contre la deuxième paroi latérale (3) et reliée en chevauchement à cette dernière.

3. Appareil suivant la revendication 2, caractérisé en ce que les parois latérales (2, 3) sont mutuellement interconnectées au moyen de dispositifs d'ancrage libérables (6, 20) qui agissent pour bloquer la languette de fixation (4) de la dite une paroi latérale (2) à la zone du bord supérieur de la dite deuxième paroi latérale (3).

4. Appareil suivant la revendication 1, caractérisé en ce que le toit formé par les parois latérales (2, 3) comporte des trous ou des fenêtres (7') par lesquelles on peut accéder à l'espace défini à l'intérieur de la goulotte (18) et à son fond (10).

5. Appareil suivant la revendication 4, caractérisé en ce que les dits trous ou les dites fenêtres (7') sont disposés dans les deux panneaux de paroi latérale (2, 3) et sont situés d'une manière telle qu'ils sont disposés en alternance dans l'un ou l'autre des panneaux (2 ou 3).

6. Appareil suivant la revendication 1, caractérisé en ce que les goulottes (18) sont pourvues, sur leur longueur, d'une ou plusieurs zones de plis en soufflet s'étendant perpendiculairement à l'axe longitudinal des goulottes (18), les goulottes (18) pouvant légèrement pivoter dans ces zones pour ajuster la pente ou la position latérale de la goulotte (18).

7. Appareil suivant une quelconque des revendications précédentes, caractérisé en ce qu'il est prévu, localement le long du fond (10) de la goulotte (18), des cloisons ou barrages fermant partiellement la section transversale d'écoulement de la goulotte.

8. Appareil suivant la revendication 1, caractérisé en ce que l'intérieur de la goulotte (18) comporte un revêtement opaque, de préférence noir, tandis que, sur l'extérieur, un revêtement réfléchissant, de préférence blanc, est prévu.

9. Appareil suivant la revendication 1, caractérisé en ce que l'entrée et/ou la sortie de la goulotte (18) sont constituées par des tubes (14) prévus dans le fond (10) de la goulotte (18), les dits tubes étant insérés par l'intermédiaire de dispositifs d'étanchéité au liquide, les dits tubes étant déplaçables dans la direction verticale.

10. Ebauche en forme de bande (1) pour former un appareil suivant la revendication 1, l'ébauche (1) comprenant un premier et un deuxième panneaux de paroi latérale (2,3) définis par des lignes de prépliage (5) pour former les parois latérales de la goulotte, des panneaux de fond (10) pour former le fond de la goulotte (18), et des panneaux de paroi d'extrémité rectangulaires (11) définis aux deux extrémités de l'ébauche (1) et qui sont contigus aux panneaux de paroi latérale (2, 3) le long d'une pluralité de panneaux triangulaires contigus pliables les uns par rappport aux autres (12) et rabattables les uns vers les autres, caractérisée en ce qu'une languette de fixation (4) est reliée de façon pivotante au dit premier panneau de paroi latérale (2) et peut être reliée au dit deuxième panneau de paroi latérale (3) de façon à former une goulotte ayant une section transversale triangulaire.

11. Ebauche en forme de bande suivant la revendication 10, caractérisée en ce qu'elle consiste en une matière plastique stratifiée comprenant une couche (21) qui sert de support et comportant un homopolymère de propylène ou un copolymère d'éthylène/propylène qui contient entre 50 et 80 % en poids de charge.

12. Ebauche en forme de bande suivant la revendication 11, caractérisée en ce que la charge est du calcaire dolomitique.
